# EUROPÄISCHE PATENTANMELDUNG

(11) **EP 1 037 475 A2**
(43) Veröffentlichungstag der Anmeldung: **20.09.2000**
(21) Anmeldenummer: 00105159.8
(22) Anmeldetag: 11.03.2000
(51) Int. Cl.: H04Q 1/10

(54) **Halterung für eine Telekommunikationsanlage**

(30) Priorität: 16.03.1999 DE 29905222 U
(71) Anmelder: DeTeWe - Deutsche Telephonwerke Aktiengesellschaft & Co., 10997 Berlin (DE)
(72) Erfinder: Morlok, Walter, 10779 Berlin (DE)

(57) **Zusammenfassung**

Die Erfindung betrifft eine Halterung für eine Telekommunikationsanlage mit einem Gehäuse zur Aufnahme von Systembaugruppen oder Bauteilen der Fernmeldetechnik und mit am Gehäuse angeordneten Anschlußdosen oder Kabelauslässen. Eine Ablage ist als Stützfuß ausgebildet und umfaßt das Gehäuse der Telekommunikationsanlage zumindest teilweise.

## Beschreibung

Die Erfindung bezieht sich auf eine Halterung für eine Telekommunikationsanlage mit einem Gehäuse zur Aufnahme von Systembaugruppen oder Bauteilen der Fernmeldetechnik und mit am Gehäuse angeordneten Anschlußdosen und/oder Kabelauslässen.

Aus der DE 40 39 502 A1 ist ein Wandgehäuse für kleine Kommunikations-Vermittlungsanlagen bekannt, das aus einer an der Wand befestigten Bodenwanne und einer abnehmbaren, auf der Bodenwanne aufsetzenden Abdeckhaube zusammengesetzt ist. An der Bodenwanne sind Aufnahmevorrichtungen für Baugruppen befestigt, die üblicherweise aus mit Bauteilen bestückten Leiterplatten bestehen, wobei die Baugruppen durch eine Verbindungsleiterplatte elektrisch miteinander verbunden sind.

Ein derartiges Wandgehäuse für kleine Kommunikations-Vermittlungsanlagen wird fest an einer Zimmerwand installiert und die an die Telekommunikationsanlage anzuschließenden Amts-, Nebenstellen- und sonstigen Leitungen werden unmittelbar vom Wandniveau her in das Innere der durch die Abdeckhaube verschlossenen Telekommunikationsanlage oder zu Steckdosen, die am Gehäuse der Telekommunikationsanlage angeordnet sind, geführt. Diese Art der festen Installation einer kleinen Telekommunikationsanlage ist zweckmäßig, wenn feste Leitungen zu den Endgeräten oder zu entsprechenden Anschlußdosen sowie zum Fernsprechnetz führen. Wird der Anschluß beispielsweise eines Computers an die Telekommunikationsanlage gewünscht, so ist entweder der Computer in der Nähe der Telekommunikationsanlage aufzustellen oder eine entsprechende Verbindungsleitung zu einem von der Telekommunikationsanlage entfernt angeordneten Computer vorzusehen, wobei die Länge der Verbindungsleitung zur Vermeidung von Übertragungsfehlern begrenzt ist.

Der vorliegenden Erfindung liegt die Aufgabenstellung zugrunde, eine ortsveränderliche Anordnung einer Telekommunikationsanlage und insbesondere eine wahlweise Wandmontage oder freie Aufstellung der Telekommunikationsanlage zu ermöglichen.

Diese Aufgabe wird erfindungsgemäß durch eine Halterung für eine Telekommunikationsanlage gelöst, die als eine das Gehäuse der Telekommunikationsanlage zumindest teilweise einfassende Ablage nach Art eines Stützfußes ausgebildet ist.

Die erfindungsgemäße Lösung ermöglicht eine beliebige, ortsveränderliche Aufstellung der Telekommunikationsanlage an Orten, die für den Benutzer die bestmögliche Verbindung zu Endgeräten ermöglichen. Insbesondere kann die Telekommunikationsanlage benachbart zu einer Datenverarbeitungseinrichtung wie beispielsweise einem Computer angeordnet werden, wenn beispielsweise eine Verbindung zum ISDN-Netz vorgesehen werden soll.

Weist das Gehäuse der Telekommunikationsanlage Befestigungseinrichtungen für eine Wandmontage auf, so ist die alternative Anordnung der Telekommunikationsanlage an einer Wand oder die Aufstellung der Telekommunikationsanlage in Verbindung mit der erfindungsgemäßen Ablage an einem beliebigen Ort im Bereich des Netzanschlusses möglich.

Vorzugsweise besteht die Ablage aus einer im wesentlichen geschlossenen Gehäuseschale mit einer Einstecköffnung für das Gehäuse der Telekommunikationsanlage.

Durch die Schalenform der Ablage in Verbindung mit einer Einstecköffnung für das Gehäuse der Telekommunikationsanlage wird ein einfaches Verbinden des Gehäuses mit der Ablage ermöglicht und gleichzeitig durch entsprechende Formgebung der Gehäuseschale eine maximale Standsicherheit gewährleistet.

Im Innern der Ablage kann mindestens ein elektrisches Kontaktelement angeordnet und mit einem entsprechenden Gegenkontaktelement am Gehäuse der Telekommunikationsanlage verbunden werden.

Durch diese Konfiguration kann die Telekommunikationsanlage in die Ablage gesteckt und unmittelbar elektrisch kontaktiert werden, ohne daß Stecker bzw. verbindungskabel unmittelbar am Gehäuse der Telekommunikationsanlage angebracht werden.

Dabei kann das im Innern der Ablage angeordnete Kontaktelement am Boden der Ablage vorgesehen und auf die Einstecköffnung der Ablage ausgerichtet sein.

Alternativ oder zusätzlich kann das im Innern der Ablage angeordnete Kontaktelement beweglich angeordnet und mit einem an der Außenseite der Ablage angeordneten Kontakthebel verbunden werden, so daß der elektrische Kontakt zwischen dem Kontaktelement und dem Gegenkontaktelement am Gehäuse der Telekommunikationsanlage durch Verstellen des Kontakthebels schließbar ist.

Die Schalenform der Ablage in Verbindung mit insbesondere Wölbungen, Vorsprüngen oder Ausnehmungen ermöglicht es, daß mit Einsteckdosen des Gehäuses der Telekommunikationsanlage verbundene Stecker von der Ablage umfaßt werden, so daß diese geschützt und optisch nicht in Erscheinung tretend innerhalb der Ablage angeordnet sind und somit eine einheitliche, geschlossene Formgebung der Verbindung von Telekommunikationsanlagengehäuse und Ablage geschaffen wird.

In einer bevorzugten Ausführungsform ist die Gehäuseschale im Querschnitt dreieckförmig ausgebildet, wobei sich die Einstecköffnung zur Aufnahme des Gehäuses der Telekommunikationsanlage an der Spitze des Dreiecks befindet und die Bodenfläche der Ablage durch die der Spitze gegenüberliegende Seite gebildet wird.

Diese Ausführungsform gewährleistet eine maximale Standsicherheit, eine einfache Verbindung der Telekommunikationsanlage mit der Ablage sowie ein hohes Maß an ästhetischer Gestaltung.

Durch die Anordnung einer der Bodenfläche der Gehäuseschale benachbarten Kabelführungsöffnung wird das Herausführen der mit der Telekommunikationsanlage verbundenen Kabel zum Nebenstellenanschluß sowie zu den Endgeräten erleichtert und gleichzeitig sichergestellt, daß die Standsicherheit der Ablage in Verbindung mit dem Gehäuse der Telekommunikationsanlage nicht beeinträchtigt wird.

In einer bevorzugten Ausführungsform der Erfindung ist die Gehäuseschale zweiteilig ausgebildet, wobei eine Aufnahmeschale zur Aufnahme des Gehäuses der Telekommunikationsanlage und eine mit der Aufnahmeschale zu verbindende Abdeckschale zur Sicherung des Gehäuses der Telekommunikationsanlage und Abdeckung der Ablage dient.

Diese Ausgestaltung der erfindungsgemäßen Lösung ermöglicht es, die Telekommunikationsanlage in die Aufnahmeschale einzusetzen und anschließend durch Aufstecken der Abdeckschale auf die Aufnahmeschale die Lage der Telekommunikationsanlage zu fixieren und eine einheitliche, geschlossene Form der Verbindung von Ablage und Telekommunikationsanlage zu erzielen. Dabei können vor dem Aufstecken der Abdeckschale die aus dem Gehäuse der Telekommunikationsanlage herausführenden oder über Stecker mit am Gehäuse der Telekommunikationsanlage angebrachten Steckdosen verbundene Kabel in geeigneter Weise positioniert werden.

Durch die Anordnung von Führungselementen zwischen der Aufnahmeschale und der Abdeckschale wird die Verbindung beider Gehäuseschalen erleichtert und gleichzeitig sichergestellt, daß die Telekommunikationsanlage in bezug auf die Ablage optimal positioniert wird.

Die Verbindung von Aufnahmeschale und Abdeckschale erfolgt mittels lösbarer Verriegelungselemente, insbesondere mittels an der Abdeckschale angeordneter Schnapphaken sowie an der Innenseite der Seitenflächen der Aufnahmeschale vorgesehenen Rastvertiefungen, in die die Schnapphaken im verriegelten Zustand der Ablage einrasten.

Die lösbare Verbindung der beiden Gehäuseschalen ermöglicht ein einfaches Einsetzen der Telekommunikationsanlage in die Ablage sowie ein leichtes Entfernen der Telekommunikationsanlage aus der Ablage, um die Telekommunikationsanlage beispielsweise an einer Wandbefestigung anzubringen. Gleichzeitig gewährleistet die formschlüssige Verriegelung der Verriegelungselemente eine feste Verbindung der Gehäuseschalen, so daß eine feste Einheit von Ablage und Kommunikationsanlage entsteht, die einen leichten Transport dieser Einheit ermöglicht.

Durch die Anordnung von Abstütz- und Stabilisierungsstegen an der Innenseite der Aufnahmeschale kann die Schalendicke gering sein, so daß die Ablage ein geringes Gewicht bei hoher Stabilität aufweist.

Durch entsprechende Formgebung können die Auflageflächen der Abschnittsstege für das Gehäuse der Telekommunikationsanlage so ausgebildet werden, daß das in die Ablage eingesteckte Telekommunikationsanlagengehäuse eine gewünschte Ausrichtung erhält, beispielsweise einen vorgegebenen Winkel gegenüber der Bodenfläche einschließt.

Durch die Anordnung eines an die Einstecköffnung der Ablage angrenzenden, von der Bodenfläche der Ablage weggerichteten Stützsteges an der Abdeckschale wird eine definierte Anlage der Ablage am Gehäuse der Telekommunikationsanlage gewährleistet, so daß beispielsweise eine vorgegebene Winkelstellung des Gehäuses in der Ablage mit größtmöglicher Stabilität gewährleistet wird.

Anhand eines in der Zeichnung dargestellten Ausführungsbeispieles soll der der Erfindung zugrunde liegende Gedanke näher erläutert werden. Es zeigen:
- Fig. 1 -: eine perspektivische Darstellung einer Telekommunikationsanlage und einer zweiteiligen Ablage;
- Fig. 2 - 5 -: verschiedene Ansichten der erfindungsmäßen Halterung für eine Telekommunikationsanlage mit zusammengesetzten Gehäuseschalen der Ablage und in die Ablage eingestecktem Gehäuse der Telekommunikationsanlage und
- Fig. 6 -: einen schematischen Längsschnitt durch eine Ablage mit eingesteckter Telekommunikationsanlage und miteinander verbindbaren Kontaktleisten im Innern der Ablage.

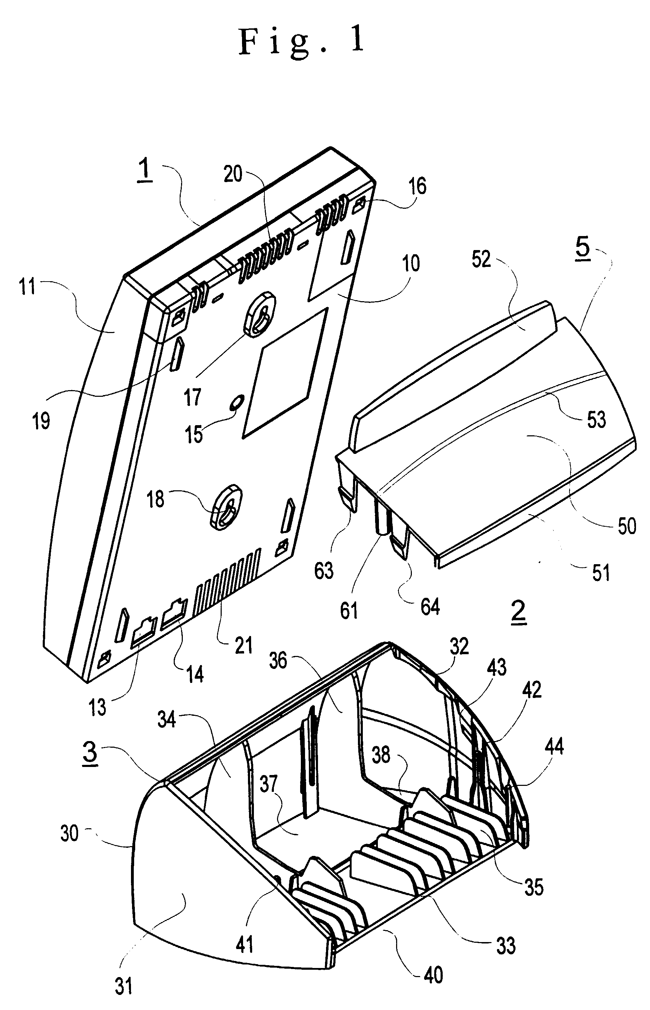

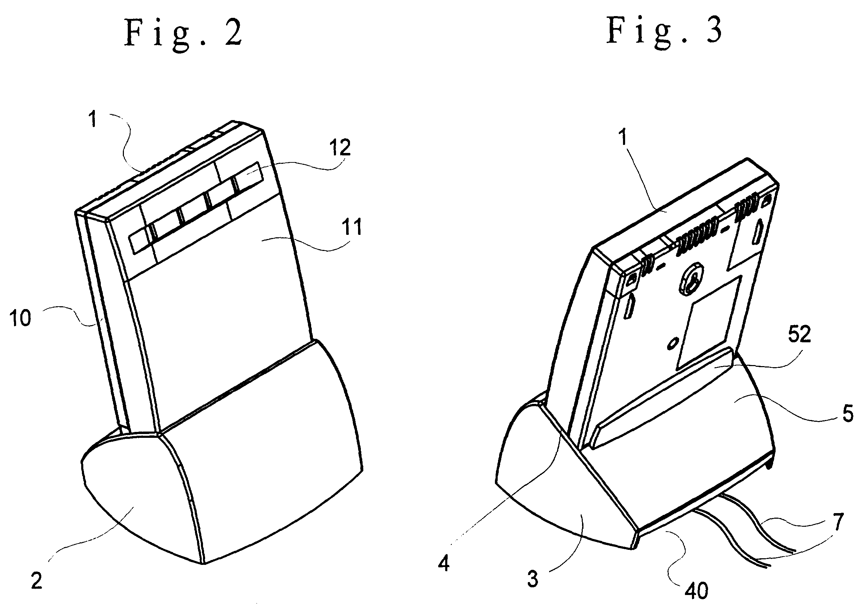

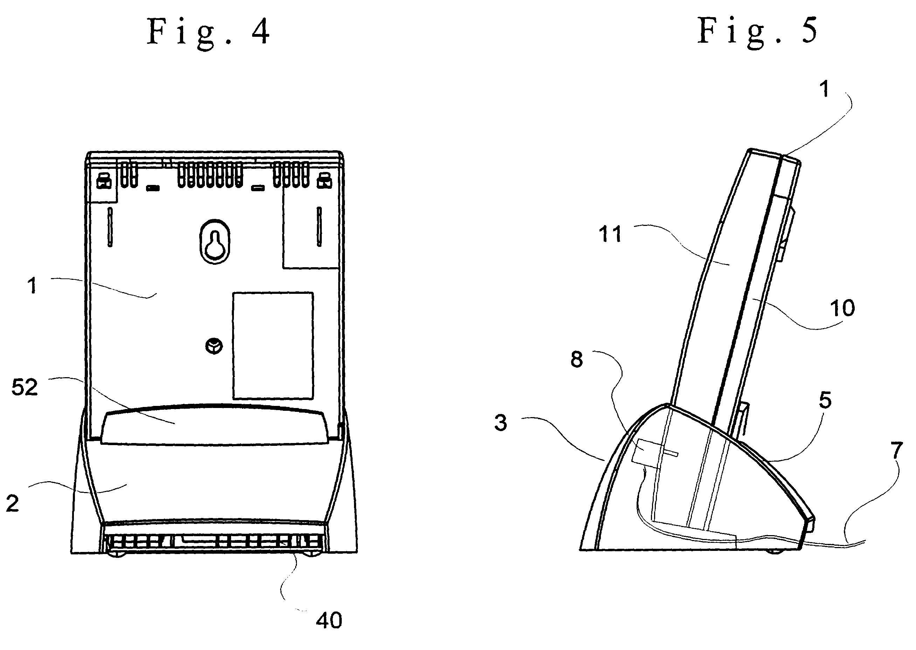

Das in Fig. 1 in perspektivischer Rückseitenansicht und in den Fig. 2 bis 5 in verschiedenen Ansichten in Verbindung mit der Ablage dargestellte Gehäuse der Telekommunikationsanlage ist zweiteilig ausgebildet und weist eine Bodenwanne 10 und eine Abdeckhaube 11 auf. Auf der Bodenwanne 10 sind Baugruppen bzw. Bauteile einer Fernmeldeeinrichtung sowie Stromversorgungseinrichtungen und Anzeigeeinrichtungen angeordnet. Durch Öffnungen an der Frontseite der Abdeckhaube 11 sind die Anzeigeeinrichtungen 12 für den Benutzer optimal erkennbar am Gehäuse der Telekommunikationsanlage 1 angebracht.

Die Bodenwanne 10 des Gehäuses der Telekommunikationsanlage 1 weist verschiedene Steckdosen 13, 14 sowie ggf. Kabelauslässe auf, die wahlweise an der Bodenwanne 10 oder insbesondere an der Unterseite der Abdeckhaube 11 angebracht sind. Diese Steckdosen 13, 14 können als TAE-Steckdosen oder Westernstecker ausgebildet sein. Die Stromversorgung der Telekommunikationsanlage 1 kann über einen Koaxialstecker oder zweipoligen Stecker bzw. direkt über eine Kabelverbindung erfolgen.

Die Verbindung der Abdeckhaube 11 mit der Bodenwanne 10 erfolgt vorzugsweise über eine Schraubverbindung mittels eines in eine Verbindungsöffnung 15 in der Bodenwanne 10 eingelassenen Verbindungselements. Zusätzliche Klemmverbindungen 16 an den Eckpunkten der Bodenwanne 10 sorgen für eine Lagefixierung und feste Verbindung zwischen Abdeckhaube 11 und Bodenwanne 10.

Zur Wandmontage des Gehäuses 10, 11 der Telekommunikationsanlage 1 sind an der Bodenwanne 10 Montageöffnungen 17, 18 zur Aufnahme von in die Wand eingelassenen Befestigungsschrauben oder -haken, so daß eine feste aber lösbare Verbindung zwischen der Bodenwanne 10 mit aufgesteckter Abdeckhaube 11 und der Befestigungswand geschaffen wird.

Zusätzlich weist die Außenseite der Bodenwanne 10 der Telekommunikationsanlage 1 Wandabstandshalter 19, die für einen hinreichenden Abstand der Bodenwanne 10 von der Befestigungswand sorgen, sowie Lüftungsschlitze 20, 21 auf, so daß Luft zur Kühlung der Baugruppen bzw. Bauteile im Gehäuse der Telekommunikationsanlage 1 über die Lüftungsschlitze 20, 21 zirkulieren kann.

An der Frontseite des Gehäuses 10, 11 der Telekommunikationsanlage 1, d.h. an der Oberseite der Abdeckhaube 11 bzw. an der Seite der Anzeigeeinrichtung 12 gemäß Fig. 2 sind vorzugsweise in dem durch die Ablage 2 abgedeckten Teil des Gehäuses 10, 11 der Telekommunikationsanlage 1 Steckdosen, insbesondere TAE-Stecker bzw. Westernstecker angeordnet, in die TAE- bzw. Westernstecker für Kabelverbindungen mit verschiedenen Endgeräten einsteckbar sind.

Zum wandunabhängigen Aufstellen der Telekommunikationsanlage 1 dient eine zweiteilige Ablage 2, die aus einer Gehäuseschale mit einer Aufnahmeschale 3 und einer Abdeckschale 5 besteht. Beide Gehäuseschalen 3, 5 sind lösbar miteinander verbindbar und bilden im verbundenen Zustand ein geschlossenes Gehäuse mit einer Einstecköffnung 4 zur Aufnahme des Gehäuses 10, 11 der Telekommunikationsanlage 1, das vorzugsweise mit seinen Schmalseiten, d.h. mit der unteren Gehäusefläche in die Einstecköffnung 4 einsteckbar ist.

Vorzugsweise wird aber das Gehäuse 10, 11 der Telekommunikationsanlage 1 in die Aufnahmeschale 3 der Ablage 2 eingesetzt und anschließend die Abdeckschale 5 auf die Aufnahmeschale 3 aufgesetzt und rastend mit der Aufnahmeschale 3 verbunden, so daß die in den Figuren 2 bis 5 zu erkennende Einheit von Telekommunikationsanlage 1 und Ablage 2 gebildet wird.

Die Aufnahmeschale 3 weist eine gewölbte Vorderfläche 30, gewölbte Seitenflächen 31, 32 und eine mit Öffnungen 37, 38 versehene Bodenfläche 33 auf. Auf der Innenseite der Aufnahmeschale 3 sind Abstützstege 34, 36 angeordnet, auf deren Innenkante das Gehäuse 10, 11 der Telekommunikationsanlage 1 aufsetzbar ist. Weiterhin sind auf der Bodenfläche 33 mehrere parallel zueinander angeordnete Stabilisierungsstege 35 angeordnet, die die Stabilität der Aufnahmeschale 3 erhöhen.

Die Abdeckschale 5 besteht aus einer gewölbten Fläche 50 mit einer abgewinkelten Rückfläche 51 und einem von der Außenseite der gewölbten Fläche 50 abstehenden Stützsteg 52. Weiterhin ist auf der Innenseite der Abdeckschale 5 ein Stabilisierungssteg 53 angeordnet, der der Formstabilität der Abdeckschale 5 auch bei geringer Materialstärke dient.

Von der Oberfläche 50 der Abdeckschale 5 abstehend sind an beiden Seitenkanten federnde Schnapphaken 63, 64 sowie eine Führungshülse 61 angeordnet. Die Schnapphaken 63, 64 und die Führungshülse 61 wirken mit Führungsstiften 41, 42 der Aufnahmeschale 3 sowie mit Rastvertiefungen 43, 44 an der Innenfläche der Seitenteile 31, 32 der Aufnahmeschale 3 zusammen.

Nach dem Einsetzen des Gehäuses 10, 11 der Telekommunikationsanlage 1 in die Aufnahmeschale 3 wird die Abdeckschale 5 mit den Führungshülsen 61 auf die Aufnahmestifte 41, 42 der Aufnahmeschale 3 aufgesteckt und so weit gegen die Aufnahmeschale 3 gedrückt, bis die Schnapphaken 63, 64 in die Rastvertiefungen 43, 44 einrasten. In dieser in den Fig. 2 bis 5 dargestellten Verbindung bildet die Telekommunikationsanlage 1 mit der Ablage 2 eine feste, ästhetisch geschlossene Einheit. Durch den von der Rückfläche 51 der Abdeckschale 5 nicht abgedeckten Teil der Aufnahmeschale 3 werden die mit der Telekommunikationsanlage 1 verbundenen Kabel 7 geführt und mit dem entsprechenden Nebenstellenanschluß bzw. Endgeräten verbunden.

Wie insbesondere den Figuren 2, 3 und 5 zu entnehmen ist, befindet sich das Gehäuse 10, 11 der Telekommunikationsanlage 1 in leicht geneigter Stellung in der Ablage 2, so daß eine optimale Erkennbarkeit der Anzeigerichtung 12 sowie eine maximale Standfestigkeit der Telekommunikationsanlage 1 gewährleistet ist. Dabei ist die Wölbung der Frontfläche der Aufnahmeschale 3 so beschaffen, daß die mit dem Gehäuse 10, 11 der Telekommunikationsanlage 1 verbundenen Stecker durch die Frontfläche der Aufnahmeschale 3 abgedeckt sind, ohne daß ein Verkanten und damit eine mangelhafte Kontaktgabe erfolgt.

Die erfindungsgemäße Lösung ist nicht auf das vorstehend beschrieben Ausführungsbeispiel beschränkt. So kann die Ablage auch einteilig ausgebildet sein oder aus mehr als zwei Teilen bestehen. Auch kann die Schalenform durch eine kompakte Ausbildung ersetzt werden, die eine Aufnahmeöffnung zum Einstecken der Telekommunikationsanlage aufweist.

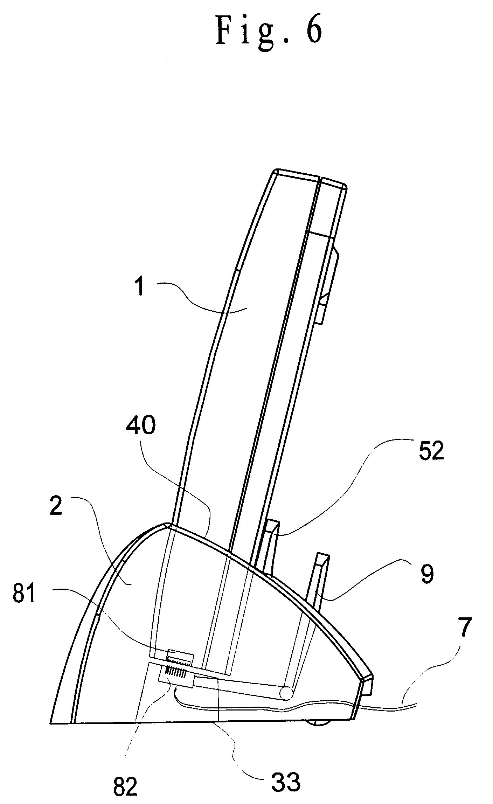

Eine weitere Ausgestaltung kann gemäß Figur 6 darin bestehen, daß am Boden 33 der Ablage 2 der Einstecköffnung 40 gegenüberliegend eine Steckerleiste oder Steckdosenleiste 82 angeordnet ist, die mit entsprechenden Gegensteckern oder -steckdosen 81 am Gehäuseboden der Telekommunikationsanlage 1 verbunden wird, wenn die Telekommunikationsanlage 1 in die Ablage 2 eingesetzt wird. Die Steckerleiste oder Steckdosenleiste 82 der Ablage 2 ist mit einem an der Außenseite der Ablage 2 angeordneten Hebel 9 zum Verstellen der Steckerleiste oder Steckdosenleiste 82 verbunden, so daß nach dem Einstecken der Telekommunikationsanlage 1 in die Ablage 2 eine elektrische Verbindung zu einem aus der Ablage 2 führenden Kabel 8 hergestellt werden kann.

Alternativ kann die Stecker- oder Steckdosenleiste 82 mit an der Außenseite der Ablage 2 angeordneten TAE- oder Westernsteckdosen elektrisch verbunden sein, an die die entsprechenden Endgeräte, beispielsweise ein Computer angeschlossen werden können.

## Patentansprüche

1. Halterung für eine Telekommunikationsanlage mit einem Gehäuse zur Aufnahme von Systembaugruppen oder Bauteilen der Fernmeldetechnik und mit am Gehäuse angeordneten Anschlußdosen oder Kabelauslässen,
**gekennzeichnet durch**
eine das Gehäuse (10, 11) der Telekommunikationsanlage (1) zumindest teilweise einfassende, als Stützfuß ausgebildete Ablage (2).

2. Halterung nach Anspruch 1, **dadurch gekennzeichnet,** daß das Gehäuse (10, 11) der Telekommunikationsanlage (1) Befestigungseinrichtungen (17, 18) für eine Wandmontage aufweist.

3. Halterung nach Anspruch 2, **dadurch gekennzeichnet,** daß das Gehäuse (10, 11) der Telekommunikationsanlage (1) zumindest zweiteilig ausgebildet ist und eine die Befestigungseinrichtungen (17, 18) für die Wandmontage aufweisende Bodenwanne (10) und eine die Systembaugruppen oder Bauteile der Fernmeldetechnik abdeckende Abdeckhaube (11) aufweist.

4. Halterung nach einem der vorangehenden Ansprüche, **dadurch gekennzeichnet,** daß die Ablage (2) aus einer im wesentlichen geschlossenen Gehäuseschale (3, 5) mit einer Einstecköffnung (4) für das Gehäuse (10, 11) der Telekommunikationsanlage (1) besteht.

5. Halterung nach einem der vorangehenden Ansprüche, **dadurch gekennzeichnet,** daß im Innern der Ablage (2) mindestens ein elektrisches Kontaktelement (82) angeordnet und mit einem entsprechenden Gegenkontaktelement (81) am Gehäuse (10, 11) der Telekommunikationsanlage (1) verbindbar ist.

6. Halterung nach Anspruch 5, **dadurch gekennzeichnet,** daß das im Innern der Ablage (2) angeordnete Kontaktelement (82) am Boden der Ablage (2) vorgesehen und auf die Einstecköffnung (4) der Ablage (2) ausgerichtet ist.

7. Halterung nach Anspruch 4 oder 5, **dadurch gekennzeichnet,** daß das im Innern der Ablage (2) angeordneten Kontaktelement (82) beweglich angeordnet und mit einem an der Außenseite der Ablage (2) angeordneten Kontakthebei (9) verbunden ist, so daß der elektrische Kontakt zwischen dem Kontaktelement (82) und dem Gegenkontaktelement (81) am Gehäuse (10, 11) der Telekommunikationsanlage (1) durch Verstellen des Kontakthebels (9) schließbar ist.

8. Halterung nach einem der vorangehenden Ansprüche, **dadurch gekennzeichnet,** daß die Gehäuseschale (3, 5) insbesondere durch die Anordnung von Wölbungen, Vorsprüngen oder Ausnehmungen so ausgebildet ist, daß der von der Ablage (2) umfaßte Teil des Gehäuses (10, 11) der Telekommunikationsanlage (1) mit dem Gehäuse (10, 11) verbundene Stecker aufnimmt.

9. Halterung nach Anspruch 4 oder 8, **dadurch gekennzeichnet,** daß die Gehäuseschale (3, 5) im Querschnitt dreieckförmig ausgebildet ist, daß sich die Einstecköffnung (4) an der Spitze des Dreiecks befindet und die Bodenfläche (33) der Ablage (2) durch die der Spitze gegenüberliegende Seite gebildet wird.

10. Halterung nach einem der vorangehenden Ansprüche, **dadurch gekennzeichnet,** daß die Gehäuseschale (3, 5) eine der Bodenfläche (33) benachbarte Kabelführungsöffnung (40) aufweist.

11. Halterung nach einem der vorangehenden Ansprüche, **dadurch gekennzeichnet,** daß die Gehäuseschale (3, 5) zweiteilig ausgebildet ist und eine zur Aufnahme des Gehäuses (10, 11) der Telekommunikationsanlage (1) ausgebildete Aufnahmeschale (3) sowie eine Abdeckschale (5) zur Sicherung des Gehäuses (10, 11) der Telekommunikationsanlage (1) und Abdeckung der Ablage (2) aufweist.

12. Halterung nach Anspruch 11, **dadurch gekennzeichnet,** daß die Aufnahmeschale (3) und die Abdeckschale (5) über Führungselemente (41, 42; 61) miteinander verbindbar sind.

13. Halterung nach Anspruch 11 oder 12, **dadurch gekennzeichnet,** daß die Aufnahmeschale (3) und die Abdeckschale (5) mittels lösbarer Verriegelungselemente (43, 44; 63, 64) miteinander verbunden sind.

14. Halterung nach Anspruch 13, **dadurch gekennzeichnet,** daß die Verriegelungselemente (43, 44; 63, 64) aus an der Abdeckschale (5) angeordneten Schnapphaken (63, 64) und an den Innenseiten der Seitenflächen (31, 32) der Aufnahmeschale (3) vorgesehenen Rastvertiefungen (43, 44) bestehen, in die die Schnapphaken (63, 64) im verriegelten Zustand der Ablage (2) einrasten.

15. Halterung nach einem der vorangehenden Ansprüche, **dadurch gekennzeichnet,** daß die Innenseite der Aufnahmeschale (3) Abstütz- und Stabilisierungsstege (34, 35, 36) aufweist.

16. Halterung nach Anspruch 15, **dadurch gekennzeichnet,** daß die Abstützstege so angeordnet und in Bezug auf die Einstecköffnung (4) ausgerichtet sind, daß das Gehäuse (10, 11) der Telekommunikationsanlage (1) in aufrechter Schrägstellung abgestützt ist.

17. Halterung nach einem der vorangehenden Ansprüche, **dadurch gekennzeichnet,** daß die Bodenfläche (33) der Gehäuseschale (3, 5) Ausnehmungen (37, 38) zur Durchführung von mit dem Gehäuse (10, 11) der Telekommunikationsanlage (1) verbundenen Kabeln (7) aufweist.

18. Halterung nach einem der vorangehenden Ansprüche, **dadurch gekennzeichnet,** daß die Abdeckschale (5) einen an die Einstecköffnung (4) angrenzenden, von der Bodenfläche (33) der Ablage (2) weggerichteten Stützsteg (52) aufweist, der bei in die Ablage (2) eingestecktem Gehäuse (10, 11) der Telekommunikationsanlage (1) vorzugsweise an der Außenseite der Bodenwanne (10) anliegt.
